# FASCICULE DE BREVET EUROPEEN

(11) **EP 3 548 342 B1**
(45) Date de publication et mention de la délivrance du brevet: **14.04.2021**
(21) Numéro de dépôt: 17801061.7
(22) Date de dépôt: 23.11.2017
(51) Int. Cl.: B60R 21/34

(54) **SYSTEME DE FIXATION D'UN BOCAL DE REFROIDISSEMENT DANS UN VEHICULE**
SYSTEM ZUR BEFESTIGUNG EINER KÜHLMITTELFLASCHE IN EINEM FAHRZEUG
SYSTEM FOR ATTACHING A COOLANT BOTTLE IN A VEHICLE

(30) Priorité: 29.11.2016 FR 1661633
(43) Date de publication de la demande: 09.10.2019
(73) Titulaire: RENAULT s.a.s., 78084 Guyancourt Cedex (FR)
(72) Inventeur: MARCHOT, Guy, 78990 Elancourt (FR); CHIBANI, Ahmed Lakdar, 95800 Courdimanche (FR)
(86) Numéro de dépôt international: PCT/EP2017/080268
(87) Numéro de publication internationale: WO 2018/099807

(56) Documents cités:
- EP-A2- 1 457 406
- DE-A1- 10 011 944
- FR-A1- 2 852 901
- FR-A1- 3 019 513
- JP-A- 2008 068 717

## Description

L'invention se rapporte à un système de fixation d'un bocal de refroidissement dans un véhicule.

Les réglementations de norme de dépollution Euro6DTemp, Euro6DFull, Euro7, combinées aux objectifs de performances moteurs, imposent des fonctions majeures au sein d'un véhicule, nécessitant un refroidissement par circulation d'eau.

Ces fonctions majeures, pouvant concerner des organes comme par exemple un turbocompresseur, un circuit EGR (de l'anglais *Exhaust Gas Recirculation*) basse ou haute pression, un injecteur d'urée, etc. tendent à se situer au-dessus du niveau minimal d'un bocal de refroidissement situé généralement sous un capot avant du véhicule, entravant les conditions de refroidissement desdits organes.

Une solution consiste donc à relever le bocal de refroidissement, afin d'assurer un refroidissement optimal dans toutes les conditions de fonctionnement. Or, rehausser la position du bocal de refroidissement sous le capot, accroit les risques de blessure d'un piéton qui serait accidentellement percuté par le véhicule. En effet, le bocal surélevé sous le capot risque de constituer un point dur, susceptible d'augmenter les blessures dudit piéton.

La demande FR2987335 concerne une boite à eau comprenant une poutre de renfort s'étendant sur sensiblement toute la longueur d'un bord avant de ladite boite, ladite poutre étant conformée pour agir en flexion sous l'effet d'un choc piéton. La solution proposée consistant à modifier la structure de la boite à eau, présente l'inconvénient de nécessiter un temps de fabrication plus long de ladite boite, de changer les outils de fabrication de celle-ci et donc d'occasionner des coûts supplémentaires

Le document JP2008068717 divulgue un système de fixation pour un réservoir de liquide de frein avec les caractéristiques techniques du préambule de la revendication 1.

Un système de fixation selon l'invention permet d'implanter un bocal de refroidissement en position haute sous le capot d'un véhicule, tout en respectant la réglementation en matière de choc piéton et en s'affranchissant des inconvénients relevés dans l'état de la technique.

L'invention a pour objet un système de fixation en position haute d'un bocal de refroidissement sous un capot de véhicule, comprenant au moins un dispositif de patte de fixation reliant le bocal à un élément de structure fixe dudit véhicule de telle sorte que le dispositif de patte de fixation est apte à subir une transformation structurelle sous l'effet d'un choc piéton, permettant au bocal de se déplacer sans constituer une butée dangereuse pour ledit piéton.

La principale caractéristique d'un système de fixation selon l'invention est que le dispositif de patte de fixation comprend une patte de fixation solidarisée au bocal de refroidissement et une entretoise solidarisée à l'élément de structure, ladite patte de fixation étant apte à coulisser le long de l'entretoise dans le cas d'un choc piéton, en ce qu'un élément de rappel élastique est placé autour de l'entretoise, et en ce que la patte de fixation est insérée autour de l'entretoise entre ledit élément de rappel et un bord d'extrémité élargi de ladite entretoise.

L'objectif d'un tel système de fixation est de permettre au bocal de refroidissement de se déplacer dès la survenance d'un choc piéton, pour empêcher ledit bocal de constituer une butée fixe, susceptible d'aggraver les blessures d'un piéton qui se ferait percuter accidentellement par le véhicule. Un dispositif de patte de fixation est un dispositif impliquant au moins une patte de fixation, et le cas échéant au moins une autre pièce coopérant avec ladite patte de fixation. La transformation structurelle est un déplacement.

Les entretoises vont servir de pistes de guidage pour guider le déplacement du bocal de refroidissement dans le cas d'un choc piéton. Pour cette configuration, il est préférentiellement supposé que l'ensemble constitué par le bocal et les pattes de fixation demeure intact suite à un choc piéton.

Selon l'invention, un élément de rappel élastique est placé autour de l'entretoise, la patte de fixation étant insérée autour de l'entretoise entre ledit élément de rappel et un bord d'extrémité élargi de ladite entretoise. De cette manière, l'impact accidentel d'un piéton sur le capot, va engendrer un effort sur le bocal, qui va réagir en se déplaçant grâce au déplacement de la patte de fixation le long de l'entretoise, dans un sens qui va comprimer l'élément de rappel élastique. Pour cette configuration, la patte de fixation ne se rompt pas et conserve sa forme initiale. L'objectif d'un tel montage est de permettre le coulissement de la patte de fixation le long de l'entretoise.

Avantageusement, l'élément de rappel élastique est un ressort à spirales.

Selon un example d'un système de fixation n'appartenant pas à l'invention, l'entretoise possède un bourrelet annulaire de retenue, la patte de fixation présentant une gorge, et ladite patte de fixation étant insérée autour de l'entretoise de sorte que ledit bourrelet soit placé dans ladite gorge. Pour une telle configuration, la patte de fixation est clipsée à l'entretoise par l'intermédiaire du bourrelet. En cas de choc piéton, la patte sort du bourrelet et peut coulisser le long de l'entretoise, traduisant le déplacement du bocal de refroidissement. Le bourrelet agit comme un organe de retenue du bocal, qui est dimensionné pour que la patte de fixation sorte du bourrelet sans trop d'effort, dans le cas d'un choc piéton présentant une certaine énergie. Pour cette configuration, la patte de fixation ne se rompt pas et conserve sa forme initiale. Il est avantageusement supposé que la patte de fixation présente une gorge annulaire prévue pour loger le bourrelet de l'entretoise.

De façon préférentielle, l'entretoise est constituée par un tube cylindrique fixé par un système de vis/écrou à l'élément de structure. De cette manière, l'entretoise est facile et rapide à fabriquer. Avantageusement, l'entretoise est en métal.

L'invention a pour autre objet une partie avant de véhicule comprenant un bocal de refroidissement, un élément de structure fixe et un système de fixation conforme à l'invention.

Un système de fixation selon l'invention présente l'avantage de pouvoir effectuer une fixation en hauteur du bocal de refroidissement sous le capot du véhicule, permettant ainsi d'assurer une meilleure circulation du liquide de refroidissement dans toutes les conditions, et sur l'ensemble des fonctions majeures de dépollution (injecteur urée, refroidisseur EGR haute pression, refroidisseur EGR basse pression) et de performances (turbo, etc...). Il a de plus l'avantage de permettre une simplification du circuit de refroidissement, avec la suppression de la vis de purge en points haut (gain éco) et du tuyau de dégazage relié directement au bocal. Il présente enfin l'avantage d'améliorer l'accessibilité au bocal de refroidissement, car celui-ci est placé plus haut, facilitant ainsi les opérations d'après-vente et la lisibilité du niveau de fluide dans le bocal. Par ailleurs, la place laissée libre par la remontée du bocal peut permettre des parcours de tuyauterie plus simples.

On donne ci-après une description détaillée de trois modes de réalisation préférés d'un système de fixation selon l'invention, en se référant aux figures suivantes :
- La figure 1A est une vue schématique de côté d'une partie avant de véhicule comprenant un example d'un système de fixation n'appartenant pas à l'invention,
- La figure 1B est une vue agrandie de côté d'une partie du système de fixation montré à la figure 1A,
- La figure 2 est une vue de côté d'un système de fixation selon l'invention,
- La figure 3 est une vue de côté d'une partie d'un example d'un système de fixation n'appartenant pas à l'invention.

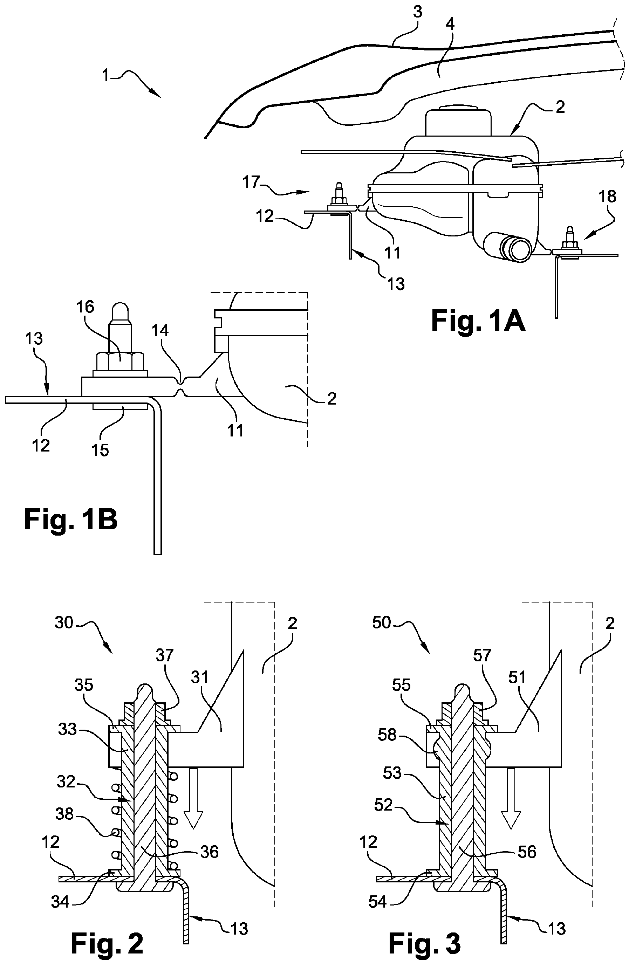

En se référant à la figure 1A, la partie avant 1 d'un véhicule comprend un bocal 2 de refroidissement constitué par un boitier comprenant un fluide de refroidissement pouvant par exemple être un mélange d'eau et de glycol. Ce bocal 2 est généralement placé sous un capot 3 et sa doublure, et plus précisément sous une épaisseur de matériau insonorisant 4 tapissant une face inférieure dudit capot 3. Grâce à un système de fixation selon l'invention, ce bocal 2 peut avantageusement être placé en position haute sous ledit capot 3, de façon à refroidir efficacement tous les organes amenés à chauffer dans le véhicule, tels que par exemple des organes de dépollution et/ou des organes liés à la performance du véhicule. En effet, un système de fixation selon l'invention, présente la particularité de maintenir de façon solide le bocal 2 sous le capot 3, et de permettre également son déplacement aisé sous l'effet de l'impact d'un piéton, afin d'empêcher qu'il ne constitue une butée dangereuse susceptible de blesser ledit piéton. De cette manière, le bocal 2 s'efface lors de la déformation du capot 3, permettant audit capot 3 d'amortir le choc du piéton.

En se référant aux figures 1A et 1B, un example d'un système de fixation 10 n'appartenant pas à l'invention comprend deux dispositifs de patte de fixation, constitués chacun par une patte de fixation 11 solidarisée au bocal 2 de refroidissement, ladite patte 11 possédant une ouverture. La patte de fixation 11 est destinée à venir au contact d'une paroi plane 12 d'un élément de structure 13 fixe du véhicule, ladite paroi 12 étant dotée d'une ouverture. La patte de fixation 11 possède une ligne 14 de faiblesse structurelle ayant une épaisseur de matière réduite par rapport à l'épaisseur du reste de la patte 11. La patte 11 de fixation vient se placer sur la paroi 12 de manière à mettre en correspondance son ouverture avec l'ouverture de ladite paroi 12. Une vis 15 est introduite dans les deux ouvertures superposées, puis un écrou 16 est serré sur ladite vis 15 pour figer la patte de fixation 11 contre la paroi 12. Le système de fixation 10 possède un premier dispositif 17 de patte de fixation placé devant le bocal 2 sous le capot 3, et un deuxième dispositif de fixation 18 placé derrière ledit bocal 2.

Dans le cas d'un choc accidentel avec un piéton, le piéton vient d'abord percuter le capot 3, qui se déforme, transmettant les efforts produits par l'impact, vers le bocal 2 de refroidissement. Sous l'effet de cet effort transmis, les pattes 11 de fixation du bocal 2 se cisaillent, libérant ledit bocal 2 sous le capot 3. La déformation du capot 3, après avoir entrainé la rupture des pattes de fixation 11, provoque dans la continuité de sa déformation, le déplacement du bocal 2, qui ne constitue plus une butée fixe, susceptible d'engendrer des blessures au piéton ou d'aggraver celles-ci. Le bocal 2 ne subit aucun dommage structurel lors du choc piéton, et peut donc être réutilisé dans le véhicule en étant fixé au moyen de nouvelles pattes de fixation 11.

En se référant à la figure 2, un système de fixation 30 selon l'invention comprend au moins un dispositif de patte de fixation, comportant une patte de fixation 31 solidarisée au bocal 2 et une entretoise 32 solidarisée à l'élément de structure 13. L'entretoise 32 se présente sous la forme d'un cylindre creux 33, ayant une section transversale constante le long de son axe de révolution, ledit cylindre 33 se terminant au niveau de chacune de ses extrémités par un bord annulaire élargi 34, 35. L'entretoise 32 possède donc deux extrémités élargies 34, 35 le long de son axe de révolution. La patte de fixation 31 possède une ouverture ayant un diamètre légèrement supérieur au diamètre externe du cylindre 33 constituant l'entretoise 32. Cette entretoise 32 est arrimée de façon fixe au bocal 2 et ne bénéficie d'aucun degré de liberté en matière de déplacement. L'entretoise 32 est implantée sur l'élément de structure fixe 13 au moyen d'un système de fixation de type vis 36/écrou 37. Plus précisément, l'entretoise 32 est posée sur une paroi 12 plane de l'élément de structure 13 de manière à s'étendre perpendiculairement à ladite paroi plane 12, l'une 34 de ses deux extrémités servant de base d'appui sur la paroi 12 de l'élément de structure 13. Cette paroi plane 12 est dotée d'une ouverture, et la vis 36 est introduite dans cette ouverture pour venir occuper le cylindre creux 33 de l'entretoise 32 en émergeant de l'extrémité élargie 35 de ladite entretoise 32, qui est opposée à celle venant en appui contre la paroi plane 12 de l'élément de structure 13. L'écrou 37 est placée autour de la partie émergeante de la vis 36, puis est ensuite serré pour fixer de façon ferme l'entretoise 32 sur l'élément de structure 13. Un ressort 38 à spirales est placé autour du cylindre 33 de l'entretoise 32, entre ses deux extrémités 34, 35 élargies. La patte de fixation 31 est enfilée autour dudit cylindre, entre une extrémité du ressort 38 et l'extrémité élargie 35 de l'entretoise 32 contre laquelle vient en butée l'écrou 37 de fixation. De cette manière, le ressort 38 se retrouve en légère compression entre l'extrémité élargie 34 de l'entretoise 32 servant de base d'appui à ladite entretoise 32 sur la paroi 12 de l'élément de structure 13, et la patte de fixation 31 enfilée autour du cylindre de l'entretoise 32.

De cette manière, dans le cas d'un choc accidentel avec un piéton, le piéton vient d'abord percuter le capot 3, qui se déforme, transmettant les efforts produits par l'impact, vers le bocal 2 de refroidissement. Sous l'effet de cet effort transmis, les pattes 31 de fixation du bocal 2 se déplacent le long de chacune des entretoises 32, en comprimant le ressort 38. Pour une telle configuration, l'ensemble constitué par le bocal 2 et ses pattes de fixation 31 se déplace le long des entretoises 32, en comprimant les ressorts 38. Il en résulte que les ressorts 38 amortissent le déplacement du bocal, en évitant la rupture des pattes de fixation 31. Le bocal 2 ne constitue plus un point dur susceptible de créer des blessures dangereuses sur le piéton.

En se référant à la figure 3, un example d'un système de fixation 50 n'appartenant pas à l'invention comprend au moins un dispositif de patte de fixation, comportant une patte de fixation 51 solidarisée au bocal 2 et une entretoise 52 solidarisée à l'élément de structure 13. L'entretoise 52 se présente sous la forme d'un cylindre creux 53, ayant une section transversale constante le long de son axe de révolution, ledit cylindre 53 se terminant au niveau de chacune de ses extrémités par un bord annulaire élargi 54, 55. L'entretoise 52 possède donc deux extrémités élargies 54, 55 le long de son axe de révolution. La patte de fixation 51 possède une ouverture ayant un diamètre légèrement supérieur au diamètre externe du cylindre 53 constituant l'entretoise 52. Cette entretoise 52 est arrimée de façon fixe au bocal 2 et ne bénéficie d'aucun degré de liberté en matière de déplacement. L'entretoise 52 est implantée sur l'élément de structure fixe 13 au moyen d'un système de fixation de type vis 56/écrou 57. Plus précisément, l'entretoise 52 est posée sur une paroi 12 plane de l'élément de structure 13 de manière à s'étendre perpendiculairement à ladite paroi plane 12, l'une 54 de ses deux extrémités servant de base d'appui sur la paroi 12 de l'élément de structure 13. Cette paroi plane 12 est dotée d'une ouverture, et la vis 56 est introduite dans cette ouverture pour venir occuper le cylindre creux 53 de l'entretoise 52 en émergeant de l'extrémité élargie 55 de ladite entretoise 52, qui est opposée à celle venant en appui contre la paroi plane 12 de l'élément de structure 13. L'écrou 57 est placée autour de la partie émergeante de la vis 56, puis est ensuite serré pour fixer de façon ferme l'entretoise 52 sur l'élément de structure 13. Le cylindre 53 de l'entretoise 52 possède un bourrelet annulaire 58 saillant vers l'extérieur du cylindre 53 et constitue une surépaisseur pour ledit cylindre 53. Ce bourrelet annulaire 58 est placé à proximité de l'extrémité élargie 55 du cylindre 53 contre laquelle vient en appui l'écrou 57. La paroi de la patte de fixation 51 délimitant l'ouverture comprend une gorge annulaire, accroissant localement le diamètre de ladite ouverture. La patte de fixation 51 est enfilée autour du cylindre de l'entretoise 52, de manière à ce que le bourrelet élargi 58 soit logé dans la gorge annulaire de la patte de fixation 51. De cette manière, le bourrelet élargi 58 constitue un organe de retenue de la patte de fixation 51 le long de l'entretoise 52.

Par conséquent, dans le cas d'un choc accidentel avec un piéton, le piéton vient d'abord percuter le capot 3, qui se déforme, transmettant les efforts produits par l'impact, vers le bocal 2 de refroidissement. Sous l'effet de cet effort transmis, les pattes 51 de fixation du bocal 2 sortent du bourrelet élargi 58 de l'entretoise 52 afin de pouvoir coulisser le long de chacune des entretoises 32, libérant ainsi le bocal 2 qui devient libre de se déplacer. Pour une telle configuration, l'ensemble constitué par le bocal 2 et les pattes de fixation 51 se déplace le long des entretoises 52, sans subir de rupture ou de dommage structurel. Le bocal 2 ne constitue plus un point dur susceptible de créer des blessures dangereuses sur le piéton.

## Revendications

1. Système de fixation (30) en position haute d'un bocal (2) de refroidissement sous un capot (3) de véhicule, comprenant au moins un dispositif (17, 18) de patte de fixation reliant le bocal (2) à un élément de structure (13) fixe dudit véhicule, ledit dispositif (17, 18) de patte de fixation étant apte à subir une transformation structurelle sous l'effet d'un choc piéton, permettant au bocal (2) de se déplacer sans constituer une butée dangereuse pour ledit piéton, le dispositif de patte de fixation comprend une patte de fixation (31) solidarisée au bocal (2) de refroidissement et une entretoise (32) solidarisée à l'élément de structure (13), et en ce que la patte de fixation (31) est enfilée autour de l'entretoise (32) et est apte à coulisser le long de ladite entretoise (32) dans le cas d'un choc piéton, **caractérisé en ce qu'**un élément de rappel (38) élastique est placé autour de l'entretoise (32), et **en ce que** la patte de fixation (31) est insérée autour de l'entretoise (32) entre ledit élément de rappel (38) et un bord d'extrémité (35) élargi de ladite entretoise (32).

2. Système de fixation selon la revendication 1, **caractérisé en ce que** l'élément de rappel élastique est un ressort à spirales (38).

3. Système de fixation selon la revendication 1 ou 2, **caractérisé en ce que** l'entretoise (32) est constituée par un tube cylindrique fixé par un système de vis (36) /écrou (37) à l'élément (13) de structure.

4. Partie avant (1) de véhicule comprenant un bocal (2) de refroidissement, un élément (13) de structure fixe et un système de fixation (30) conforme à l'une quelconque des revendications 1 à 3.

## Patentansprüche

1. System (30) zur Befestigung eines Kühlflüssigkeitsbehälters (2) in einer oberen Position unter einer Fahrzeughaube (3), umfassend mindestens eine Befestigungslaschenvorrichtung (17, 18), die den Behälter (2) mit einem feststehenden Strukturelement (13) des Fahrzeugs verbindet, wobei die Befestigungslaschenvorrichtung (17, 18) unter der Wirkung eines Zusammenpralls mit einem Fußgänger eine strukturelle Umwandlung mitmachen kann, wodurch sich der Behälter (2) verschieben kann, ohne eine gefährliche Aufprallstelle für den Fußgänger darzustellen, wobei die Befestigungslaschenvorrichtung eine fest mit dem Kühlflüssigkeitsbehälter (2) verbundene Befestigungslasche (31) und einen fest mit dem Strukturelement (13) verbundenen Abstandhalter (32) umfasst und dass die Befestigungslasche (31) um den Abstandhalter (32) geschlungen ist und bei einem Zusammenprall mit einem Fußgänger entlang dem Abstandhalter (32) gleiten kann, **dadurch gekennzeichnet, dass** ein elastisches Rückholelement (38) um den Abstandhalter (32) platziert ist und dass die Befestigungslasche (31) um den Abstandhalter (32) zwischen dem Rückholelement (38) und einem verbreiterten Endrand (35) des Abstandhalters (32) eingeführt ist.

2. Befestigungssystem nach Anspruch 1, **dadurch gekennzeichnet, dass** das elastische Rückholelement eine Spiralfeder (38) ist.

3. Befestigungssystem nach Anspruch 1 oder 2, **dadurch gekennzeichnet, dass** der Abstandhalter (32) aus einem zylindrischen Rohr besteht, das mittels eines Schrauben-(36)/Mutter-(37)-Systems an dem Strukturelement (13) befestigt ist.

4. Vorderer Fahrzeugteil (1), umfassend einen Kühlflüssigkeitsbehälter (2), ein feststehendes Strukturelement (13) und ein Befestigungssystem (30) nach einem der Ansprüche 1 bis 3.

## Claims

1. System (30) for attaching a coolant bottle (2) in an upper position beneath a bonnet (3) of a vehicle, comprising at least one attachment tab device (17, 18) connecting the bottle (2) to a fixed structural element (13) of said vehicle, said attachment tab device (17, 18) being able to undergo a structural transformation under the effect of a collision with a pedestrian, allowing the bottle (2) to move and not constitute an immovable object that would be dangerous for said pedestrian, the attachment tab device comprises an attachment tab (31) that is secured to the coolant bottle (2) and a spacer (32) that is secured to the structural element (13), and in that the attachment tab (31) is threaded around the spacer (32) and is able to slide along said spacer (32) in the event of a collision with a pedestrian, **characterized in that** an elastic return element (38) is placed around the spacer (32), and **in that** the attachment tab (31) is inserted around the spacer (32) between said return element (38) and a widened end edge (35) of said spacer (32).

2. Attachment system according to Claim 1, **characterized in that** the elastic return element is a coil spring (38) .

3. Attachment system according to Claim 1 or 2, **characterized in that** the spacer (32) consists of a cylindrical tube fastened by a screw (36)/nut (37) system to the structural element (13).

4. Front portion (1) of a vehicle comprising a coolant bottle (2), a fixed structural element (13) and an attachment system (30) according to any one of Claims 1 to 3.
